# DEMANDE DE BREVET EUROPEEN

(11) **EP 3 381 400 A1**
(43) Date de publication de la demande: **03.10.2018**
(21) Numéro de dépôt: 18315002.8
(22) Date de dépôt: 14.03.2018
(51) Int. Cl.: A61C 7/36, A61C 7/08

(54) **ACTIVATEUR DE CROISSANCE DENTO-MAXILLO-FACIALE**

(30) Priorité: 30.03.2017 FR 1770322
(71) Demandeur: Valero, Stephan, 600 Sant Julia de Loria (AD)
(72) Inventeur: Valero, Stephan, 600 Sant Julia de Loria (AD)
(74) Mandataire: Flavenot, Bernard

(57) **Abrégé**

La présente invention concerne les activateurs de croissance dento-maxillo-faciale destiné à être positionné entre la mâchoire supérieure Ms et la mâchoire inférieure Mi d'un être humain.

L'activateur selon l'invention est caractérisé par le fait qu'il comporte une glissière supérieure 10 apte à être fixée sur la denture supérieure Ds et une glissière inférieure 12 apte à être fixée sur la denture inférieure Di, au moins deux crochets 21, 22 aptes à être fixés au moins indirectement sur respectivement les dentures supérieure et inférieure, au moins un brin 35 défini entre deux extrémité libres 31, 32 et conformé pour avoir une faible élasticité en traction et une grande souplesse en flexion, et un point de rupture sous l'effet d'une force de traction déterminée, et des moyens d'accrochage/décrochage des deux extrémités libres du brin respectivement sur les deux crochets.

## Description

L'invention concerne les activateurs de croissance dento-maxillo-faciale.

Différents types d'appareils d'ODMF (appareils d'orthopédie dento-maxillo-faciale) ont été élaborés au cours du temps pour corriger la posture et la dynamique de la mandibule.

De tels appareils sont par exemple décrits dans les FR-A-2 911 490 et FR-A-2 968 193, tous deux au nom du Demandeur.

L'appareil décrit dans ces documents concerne un activateur de croissance dento-maxillo-faciale amovible comportant essentiellement une glissière supérieure, une glissière inférieure, deux ensembles de tiges coulissantes et des articulations entre les tiges coulissantes et les glissières.

Dans chaque glissière de cet activateur est noyée une armature de préférence métallique. Sur les deux armatures sont fixés deux tubes supports creux, chaque tube support de section intérieure polygonale, ellipsoïde ou irrégulière étant employé pour maintenir une clavette de réglage, laquelle clavette de réglage fonctionnant avec l'extrémité d'une tige coulissante pour former une articulation et autoriser les mouvements relatifs entre les glissières supérieure et inférieure.

L'appareil activateur de croissance selon la réalisation décrite ci-dessus présente de multiples avantages. Notamment : l'appareillage fonctionnel physiologique permet une reprise de la croissance squelettique du maxillaire supérieur et de la mandibule du patient par des rééquilibrations et des stimulations des fonctions et des forces musculaires physiologiques de la cavité buccale, essentiellement la fonction linguale secondaire et la mastication, le principe actif de ces fonctions physiologiques étant la contraction musculaire à l'origine des contraintes mécaniques et des mouvements des structures squelettiques et alvéolo-dentaires.

C'est le patient qui est donc à l'origine de la croissance de ses mâchoires, ainsi que du développement et de l'harmonisation de ses arcades dentaires. Par ailleurs, l'appareillage, qui n'agit pas par des forces appliquées directement sur les maxillaires ou sur les dents, est mieux supporté par le patient.

L'articulation des tiges coulissantes moins épaisse entraîne une plus grande discrétion de l'appareil, l'esthétique est améliorée et l'absence de pivots de grandes dimensions favorise l'acceptation du traitement par le patient. L'appareillage, avec son dispositif de fixation des tiges coulissantes comportant des tubes supports rectangulaires et des clavettes associées, fonctionne selon le principe de l'articulation des "maillons de chaîne". Cet agencement permet un positionnement, encore plus vers l'arrière, de l'articulation postérieure des tiges coulissantes, ce qui autorise la disposition de tiges coulissantes plus longues et donc évite qu'elles se déboîtent dans la bouche du patient. La présence d'un écarteur palatin dans l'appareillage fonctionnel permet d'accompagner le développement transversal de l'arcade supérieure au fur et à mesure de la correction des relations antéropostérieures des arcades dentaires.

Du point de vue du praticien, le système de fixation des tiges coulissantes proposé dans cet appareil permet de maîtriser le positionnement des articulations des tiges coulissantes et donc d'obtenir un appareillage plus efficace notamment vis à vis des mouvements de latéralité.

Dans ces appareils connus, les articulations des tiges coulissantes avec les glissières peuvent être déplacées pour s'adapter à l'évolution du traitement. Elles comportent essentiellement des clavettes de réglage permettant au praticien de changer aisément les différentes tiges et d'employer des longueurs adaptées pour suivre la croissance mandibulaire vers l'avant sans qu'il soit nécessaire de souder de nouvelles cales ou de modifier de façon coûteuse l'appareil, ces clavettes permettant le démontage aisé de l'appareillage et facilitant les réglages.

Des activateurs de croissance dento-maxillo-faciale sont aussi décrits dans les US 2015/216716 et EP 1658823. Cependant, dans le document US référencé ci-dessus, la tige qui relie les deux mâchoires travaille en traction et en compression et, dans le document EP, la tige en forme de lamelle, qui relie les deux mâchoires, ne travaille en flexion que dans un plan et ne permet pas au patient, par exemple, de manger normalement ni de savoir s'il utilise cette lamelle dans le sens de la correction souhaitée par l'orthodontiste.

La présente invention a pour but de réaliser un activateur qui soit encore plus sécurisé, d'une structure plus simple et donc d'un prix de revient inférieur à celui des activateurs de l'art antérieur, visant à exiger moins d'interventions par le praticien orthodontiste et à être très pratique à utiliser notamment par le patient lui-même.

Plus précisément, la présente invention a pour objet un activateur de croissance dento-maxillo-faciale apte à être positionné entre la mâchoire supérieure et la mâchoire inférieure d'un être humain supportant respectivement la denture supérieure et la denture inférieure, l'activateur comportant les caractéristiques selon au moins la revendication 1 annexée.

D'autres caractéristiques et avantages de la présente invention apparaîtront au cours de la description suivante donnée en regard des dessins annexés à titre illustratif mais nullement limitatif, dans lesquels :
La figure 1 représente, en vue de dessus, le schéma d'un mâchoire permettant d'illustrer les dentures et une partie de l'activateur selon l'invention,
La figure 2 représente, en vue de côté, une mâchoire sur laquelle est placé un activateur selon l'invention, et
La figure 3 représente schématiquement une partie d'éléments permettant de réaliser et faire évoluer un activateur selon l'invention au cours du traitement du patient.

Il est précisé que, dans la présente description, si l'adverbe "sensiblement" est associé à un qualificatif d'un moyen donné, ce qualificatif doit être compris au sens strict ou approché.

En référence aux trois figures annexées, l'activateur de croissance dento-maxillo-faciale selon l'invention est apte à être positionné entre la mâchoire supérieure Ms et la mâchoire inférieure Mi d'un être humain, ces deux mâchoires supportant respectivement la denture supérieure Ds et la denture inférieure Di.

L'activateur comporte au moins une glissière supérieure 10 apte à être fixée sur la denture supérieure Ds et une glissière inférieure 12 apte à être fixée sur la denture inférieure Di, ces deux glissières étant agencées de façon que, lorsqu'elles sont fixées sur leur denture respective, elles aient respectivement une face libre 11, 13 sensiblement au niveau des sommets 14, 15 des dentures et en regard l'une de l'autre pour que, via les deux faces libres 11, 13 des deux glissières, les deux dentures supérieure et inférieure soient aptes à glisser l'une sur l'autre relativement librement par un mouvement de va et vient des deux mâchoires.

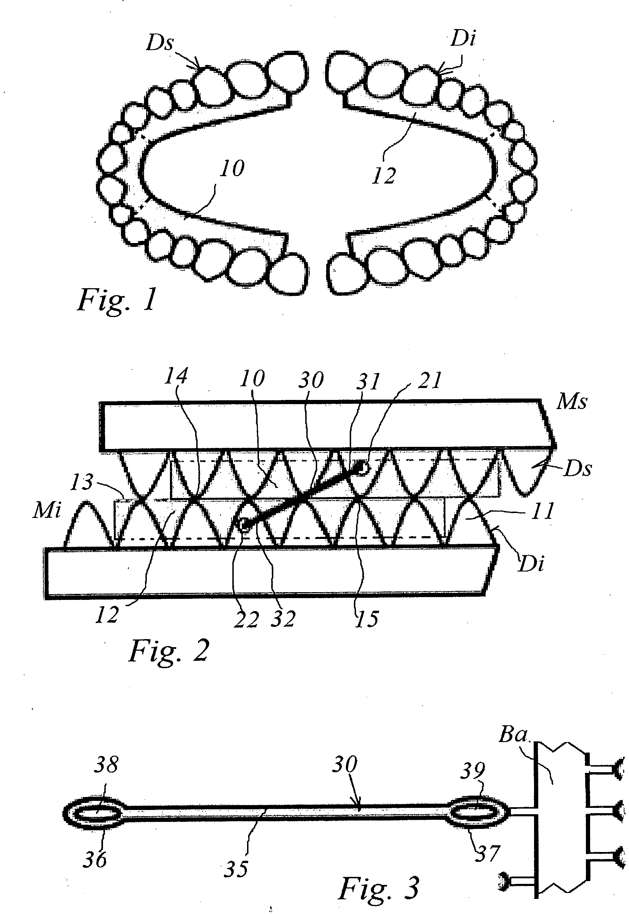

Ces glissières supérieure Ds et inférieure Di sont aptes à être fixées sur les dentures par collage, ou par clipsage ou même avec des crochets ou analogues, la représentation de la figure 1 n'étant qu'un des modes de fixation possibles donné à titre d'exemple. Ces glissières sont illustrées à l'intérieur des arcades dentaires. Mais il est aussi possible de les positionner sur les faces occlusales des dents pour notamment limiter l'encombrement de l'activateur et la gêne qu'il peut provoquer lorsqu'il est en place dans la bouche du patient.

Sur les figures, les glissières sont représentées d'une seule pièce pour entourer intérieurement chaque mâchoire. Mais elles peuvent être réalisées en deux parties, une fixée sur les dents du côté droit et une autre fixée sur les dents du côté gauche (comme évoqué en traits interrompus sur la figure 1).

Ces glissières supérieure Ds et inférieure Di sont par exemple réalisées en résine dentaire de façon qu'elles soient aptes à être fixées sur les dentures par exemple par collage au moyen d'une colle dentaire, bien connue des dentistes.

L'activateur comporte en outre, figure 2, au moins deux crochets 21, 22 aptes à être fixés au moins indirectement sur respectivement les dentures supérieure Ds et inférieure Di, c'est-à-dire soit directement sur les dents soit indirectement via les glissières qui sont elles-mêmes fixées sur les dents. Dans la pratique, l'activateur comportera généralement quatre crochets, deux à droite et deux à gauche, pour obtenir une symétrie de traitement.

L'activateur comporte en outre au moins un tirant 30 (en pratique généralement deux tirants, un de chaque côté de la mandibule) défini entre deux extrémités libres 31, 32, et des moyens d'accrochage/décrochage de ces deux extrémités libres respectivement sur les deux crochets.

Ce tirant est avantageusement constitué d'un brin 35, figure 3, dont les deux extrémités 36, 37 sont en forme de boucles fermées 38, 39 aptes à passer respectivement dans les deux crochets 21, 22 pour s'y s'accrocher.

Ce brin est réalisé de façon qu'il ait une faible élasticité en traction et une grande souplesse en flexion dans tout l'espace, c'est-à-dire dans tous les plans définis dans l'espace à trois dimensions, et un point de rupture sous l'effet d'une force de traction développée entre les deux dites mâchoires, qui sera déterminée par un orthodontiste en fonction du patient.

Il est bien précisé que, étant donné que, par nature, tous les corps présentent une certaine élasticité, l'homme du métier saura choisir un brin en un matériau qui, pour cette application, peut être considéré comme non élastique ou du moins présentant une élasticité négligeable par rapport aux forces qui peuvent s'exercer sur lui.

Le brin 35 est par exemple en un matériau plastique ou analogue, notamment un polymère tel que le nylon, le polyester ou le polypropylène qui ont une bonne résistance aux agressions chimiques pouvant se produire dans le corps humain et suffisamment biocompatibles pour ne pas être rejetés par, ou un danger pour, l'organisme.

La présente invention est aussi relative à un kit pour réaliser un activateur tel que défini ci-dessus, qui se présentera par exemple sous blister ou analogue stérilisé qui enferme au moins : une glissière supérieure 10 et une glissière inférieure 12, au moins deux crochets 21, 22 aptes à être fixés au moins indirectement sur respectivement les dentures supérieure Ds et inférieure Di, et des tirants 30 fixés sur une barrette Ba, éventuellement de la colle pour coller les glissières sur les dentures et les crochets 21, 22 sur les dents de façon directe ou indirecte.

En effet, comme il sera explicité ci-après, notamment pour faciliter l'utilisation de l'activateur au cours d'un traitement, le tirant 30, ou plus précisément le brin 35, est pris parmi une pluralité de tirants qui sont fixés sur une barrette Ba, figure 3.

Sur cette barrette Ba, le tirant 30 est choisi parmi une pluralité de tirants de différentes longueurs, et/ou parmi une pluralité de tirants ayant un point de rupture sous l'effet de forces de traction d'intensités déterminées différentes.

L'activateur de croissance dento-maxillo-faciale décrit ci-dessus et illustré sur les figures s'utilise de la façon suivante :
Il est supposé qu'un patient présente une mâchoire dans laquelle la denture inférieure Di est trop en retrait de la denture supérieure Ds, comme représenté par exemple sur la figure 2. Le praticien commence par réaliser et positionner les deux glissières 10, 12 de son choix qu'il détermine selon la nature et la morphologie du patient à soigner.

Puis il place les crochets 21, 22 sur les dents par exemple par collage ou analogue. Dans le cas envisagé, le crochet 22 fixé sur une dent de la denture Di inférieure en retrait par rapport au crochet 21 fixé sur une dent de la denture supérieure Ds. De façon préférentielle, les opérations décrites ci-dessus seront effectuées de chaque côté des mâchoires.

Ensuite, après avoir mesuré la distance entre ces deux crochets (s'il ne l'a pas déjà déterminée avant la pose des crochets), il détermine la longueur du tirant 30 qui doit les relier. Cette longueur est choisie de façon qu'elle soit légèrement inférieure à la distance mesurée entre les deux crochets posés au début du traitement.

Dans ces conditions, le patient est fortement gêné pour faire un mouvement de recul de sa denture inférieure par rapport à sa denture supérieure, à cause de la longueur du tirant choisie par le praticien et de la faible élasticité en traction de ce tirant. En revanche, la grande élasticité en flexion du tirant permet au patient de mastiquer correctement.

Pour soulager la sensation de gêne, le patient aura donc tendance à avancer sa mâchoire inférieure, c'est-à-dire à exercer lui-même l'effort rééducatif nécessaire. En revanche, s'il force trop sur le tirant en tentant de faire revenir sa mâchoire inférieure à sa position originelle, étant donné qu'il est taré pour rompre sous une certaine force, le tirant va se rompre.

Le patient saura alors qu'il n'a pas respecté le protocole défini par le praticien et, dans le cas bien sûr où il veut réellement se soigner, sera obligé de remplacer le tirant rompu par un tirant intact, ce qu'il pourra d'ailleurs faire lui-même, sans aller chez le praticien, compte tenu de la simplicité de la manipulation. Il ne faudra pas, en plus, qu'il en casse trop souvent car les tirants qui lui sont remis sont contingentés sur la barrette Ba. Dès qu'il aura éclusé son stock de tirants, il sera obligé d'en approvisionner d'autres, ce qui augmentera le coût de son soin.

Cette procédure va donc lui permettre d'apprendre à gérer lui-même son traitement et à moindre coût, si bien entendu il veut le faire sérieusement.

En outre, au fur et mesure de l'avancement du traitement, les tirants seront remplacés par des tirants de plus en plus courts pour forcer le patient à faire avancer sa mâchoire/denture inférieure, jusqu'à ce qu'elle se positionne correctement et naturellement par rapport à la mâchoire/denture supérieure.

Il va de soi que, même si le traitement n'oblige pas le patient à se rendre très souvent chez le praticien, son avancement sera surveillé lors de visites périodiques chez ce dernier.

## Revendications

1. Activateur de croissance dento-maxillo-faciale apte à être positionné entre la mâchoire supérieure (Ms) et la mâchoire inférieure (Mi) d'un être humain, ces deux mâchoires supportant respectivement la denture supérieure (Ds) et la denture inférieure (Di), l'activateur comportant au moins :
• une glissière supérieure (10) apte à être fixée sur la denture supérieure (Ds) et une glissière inférieure (12) apte à être fixée sur la denture inférieure (Di), ces deux glissières étant agencées de façon que, lorsqu'elles sont fixées sur leur denture respective, elles aient respectivement une face libre (11, 13) sensiblement au niveau des sommets (14, 15) des dentures et en regard l'une de l'autre pour que, via les deux faces libres (11, 13) des deux glissières, les deux dentures supérieure et inférieure soient aptes à glisser l'une sur l'autre relativement librement par un mouvement de va et vient des deux mâchoires,
• au moins deux crochets (21, 22) aptes à être fixés au moins indirectement sur respectivement les dentures supérieure (Ds) et inférieure (Di),
• au moins un tirant (30) défini entre deux extrémité libres (31, 32), et
• des moyens d'accrochage/décrochage des deux extrémités libres (31, 32) du tirant respectivement sur les deux dits crochets,
**caractérisé par le fait que** ledit tirant est constitué d'un brin (35), ledit brin étant conformé pour avoir :
* une faible élasticité en traction et une grande souplesse en flexion dans l'espace à trois dimensions, et
* un point de rupture sous l'effet d'une force de traction développée entre les deux dites mâchoires et déterminée par un orthodontiste en fonction du patient.

2. Activateur selon la revendication 1, **caractérisé par le fait que** les moyens d'accrochage/décrochage des deux extrémités libres (31, 32) du tirant respectivement sur les deux dits crochets sont constitués par les deux extrémités (36, 37) du dit brin conformées en boucles fermées (38, 39) aptes à s'accrocher sur respectivement les deux crochets (21, 22).

3. Activateur selon l'une des revendications 1 et 2, **caractérisé par le fait que** ledit brin (35) est en un matériau plastique.

4. Activateur selon l'une des revendications 1 à 3, **caractérisé par le fait que** les deux glissières supérieure (Ds) et inférieure (Di) sont aptes à être fixées sur les dentures par au moins l'un des moyens suivants : collage, clipsage, accrochage.

5. Activateur selon l'une des revendications précédentes, **caractérisé par le fait que** les deux glissières supérieure (Ds) et inférieure (Di) sont en résine dentaire.

6. Activateur selon l'une des revendications précédentes, **caractérisé par le fait que** ledit brin (35) est choisi parmi une pluralité de brins de différentes longueurs.

7. Activateur selon l'une des revendications précédentes, **caractérisé par le fait que** ledit brin (35) est choisi parmi une pluralité de brins ayant un point de rupture sous l'effet de forces de traction d'intensités déterminées différentes.

8. Activateur selon l'une des revendications précédentes, **caractérisé par le fait que** ledit brin est pris parmi une pluralité de brins fixés sur une barrette (Ba).

9. Kit pour réaliser un activateur selon les revendications 1 à 8, **caractérisé par le fait qu'**il comporte :
• une glissière supérieure (10) et une glissière inférieure (12),
• au moins deux crochets (21, 22) aptes à être fixés au moins indirectement sur respectivement les dentures supérieure (Ds) et inférieure (Di), et
• des brins (35) fixés sur une barrette (Ba).
